# EUROPEAN PATENT SPECIFICATION

(11) **EP 0 754 311 B1**
(45) Date of publication and mention of the grant of the patent: **24.07.2002**
(21) Application number: 95915581.3
(22) Date of filing: 06.04.1995
(51) Int. Cl.: G02B 27/28, G02F 1/1335

(54) **POLARIZED LIGHT SOURCES**
POLARISIERTE LICHTQUELLE
SOURCES DE LUMIERE POLARISEE

(30) Priority: 06.04.1994 US 223548
(43) Date of publication of application: 22.01.1997
(73) Proprietor: MINNESOTA MINING AND MANUFACTURING COMPANY, St. Paul, Minnesota 55133-3427 (US)
(72) Inventor: WORTMAN, David, L., Saint Paul, MN 55133-3427 (US); GARDINER, Mark, E., Saint Paul, MN 55133-3427 (US); OUDERKIRK, Andrew, J., Saint Paul, MN 55133-3427 (US); JONZA, James, M., Saint Paul, MN 55133-3427 (US); WEBER, Michael, F., Saint Paul, MN 55133-3427 (US)
(74) Representative: VOSSIUS & PARTNER
(86) International application number: US9504260
(87) International publication number: WO9527919

(56) References cited:
- EP-A- 0 488 544
- EP-A- 0 552 725
- EP-A- 0 573 905
- US-A- 4 212 048

## Description

The invention relates to light sources adapted to efficiently produce light of a particular polarization.

Many applications require polarized light to function properly. One example of such an application are optical displays, such as liquid crystal displays (LCDs), which are widely used for lap-top computers, hand-held calculators, digital watches, automobile dashboard displays and the like. Another such application is task lighting configurations for increased contrast and glare reduction.

To produce polarized light, a light source is typically coupled with one or more absorptive polarizers. These polarizers use dichroic dyes which transmit light of one polarization orientation more strongly than the orthogonal polarization orientation. Dichroic polarizers are very inefficient, however, in that light of the orthogonal polarization is largely absorbed and is therefore unavailable for application illumination. For example, a typical dichroic polarizer transmits only about 35-45% of the incident light emitted by a standard display backlight. This inefficiency is a major disadavantage to dichroic polarizers, as the light which is absorbed is not available for the associated application. In an LCD display, for example, the absorbed light does not contribute to the illumination, and thus the overall brightness, of the LCD.

Vacuum deposited, thin film dielectric polarizers are not absorbing, as are dichroic polarizers, but do suffer other disadvantages, such as poor angular response and poor spectral transmission for non-designed wavelengths. In addition, they are conventionally coated onto stable substrates, such as bulk optical glass or polymer substrates, which render them too bulky and heavy for use in applications requiring light weight and small profile.

Current technology, for LCD illumination, makes no attempt at polarization control other than use of inefficient, dichroic polarizers. Current technology, for glare reduction in task lighting and vehicle displays, does not use polarizers at all due to the inefficiencies of dichroics, and the bulk and angle performance of vacuum deposited dielectric polarizers.

EP-A-0552 725 describes a polarization illumination apparatus which includes a light source, a light condensing means made of a parabolic reflector, and a polarizing beam splitter. The polarizing beam splitter includes a tilted dielectric film coated onto a prism substrate. The polarizing beam splitter splits light into first and second polarization components, and the first polarization is returned to the light condensing means. This light is reflected by the light condensing means and, in so doing, the direction polarization of the light is changed.

EP-A-0 573 905 describes a retroreflecting polarizer for projection systems. The system includes an LCD display panel, an overhead projector, a retroreflecting polarizer and a quarter wave plate between the LCD panel and the ligth source of the overhead projector. The retroreflecting polarizer includes two structured surface materials with an optical stack of alternating high and low refractive index materials. The combination creates a light recycling system which converts s-polarized light to p-polarized light.

The present polarized light sources described herein include a diffuse light source and a reflective polarizing element placed proximate thereto. The reflective polarizing element transmits light of a desired polarization and reflects light of another polarization back into the diffuse source. The light of the rejected polarization is reflected back into the diffuse source and is randomized. Some of the initially rejected light is thus converted into the desired polarization and is transmitted through the reflective polarizing element. This process continues, and the repeated reflections and subsequent randomization of light of the undesired polarization increases the amount of light of the desired polarization that is emitted by the polarized light source.

The diffuse source consists of a light emitting region and a light reflecting, scattering and depolarizing region. The source may be a fluorescent lamp, incandescent lamp, solid-state source or electroluminescent (EL) light source.

The reflective polarizing element may be a tilted dielectric film coated on a glass substrate, bulk optic or structured surface. The reflective polarizing element may also be a multilayered, birefringent polymeric film.

In a typical application, the polarized light source is used to illuminate an optical display, such as a Liquid Crystal Display (LCD). For this purpose, the polarized light source is used in combination with a means for delivering the polarized light to an optical display. This can include free space propagation, a lens system, or a polarization preserving light guide.

The polarized light source may also be used in various task lighting configurations such as vehicle dashboard displays, or fluorescent fixtures in an office lighting environment. For glare reduction, the polarized light source is placed to provide illumination to a specific task location where a manual or visual task is being performed.

The various objects, features and advantages of the present polarized light source will be fully understood upon reading and understanding the following detailed description and accompanying drawings in which:
Figure 1 is a simplified block diagram of the present polarized light source;
Figure 2 is a schematic cross section of the present polarized light source showing the operation thereof;
Figures 3A-3C are schematic cross sections illustrating the optical principle of the present polarized light source in which the reflective polarizing element is implemented with bulk optic components;
Figures 4A-4B show operation of the illustrative light source of Figures 3A and 3B, respectively;
Figures 5A-5D are schematic cross sections of the present polarized light source in which the reflective polarizing element is implemented with a multilayer, birefringent reflective polarizing film;
Figure 6 is an exaggerated cross sectional view of the preferred multilayer reflective polarizing film;
Figures 7A-7C show graphs of the performance of the preferred multilayer reflective polarizing film and multilayer mirror;
Figures 8A-8D show the present polarized light source configured with light guides for directing the polarized light;
Figure 9 shows the present polarized light source in a configuration for a transflective optical display;
Figures 10A-10C show the present polarized light source in various task lighting configurations; and
Figure 11 shows an illustrative polarized light source in fluorescent fixture applications, also illustrating the optical principle of the present invention.

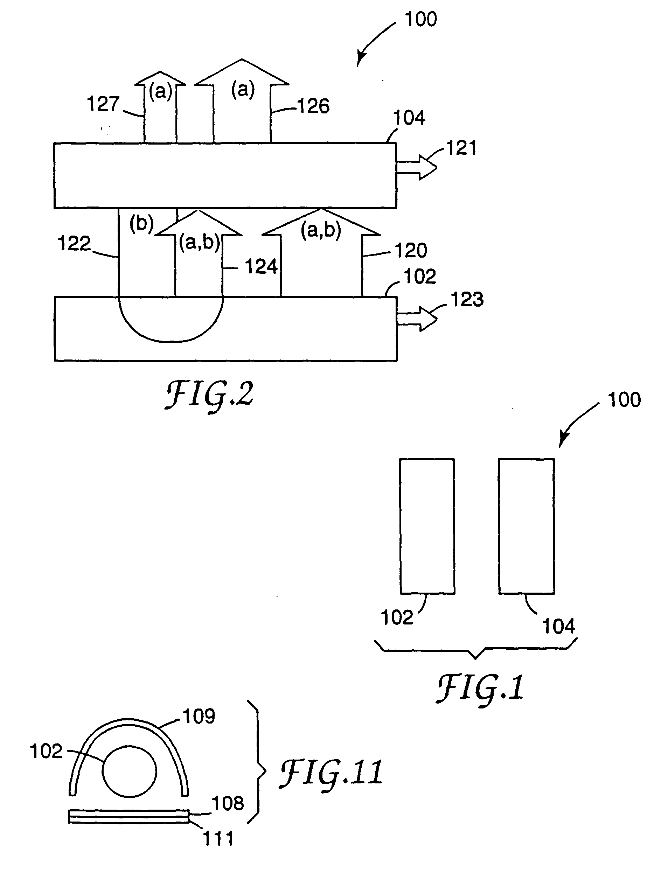

Figure 1 shows a simpified block diagram of the present polarized light source 100. The source 100 includes a diffuse light source 102 and a reflective polarizing element 104 placed proximate thereto.

For purposes of the present application, "diffuse source" means any source which emits light having a high degree of scatter or randomization with respect to both polarization and direction. The diffuse source 102 preferably includes a light emitting region and a light reflecting, scattering and depolarizing region. Depending upon the particular application with which the present polarized light source is to be used, the diffuse source 102 may be a fluorescent lamp, incandescent lamp, solid-state source or electroluminescent (EL) light source. In a fluorescent lamp, such as a hot or cold cathode lamp as used in a typical backlit LCD, the phosphors provide all of these functions. In the case
where a highly collimated beam of light is desired, the reflective polarizing element can be optically configured to image the rejected polarization back onto the light emitting region, for example, a filament or arc. The light emitting region will serve both as the light source and the depolarizing region.

The reflective polarizing element 104 may be a dielectric film coated on a glass substrate, bulk optic, or structured surface. Alternatively, the reflective polarizing element may be a multilayered, birefringent polymeric reflective polarizing film.

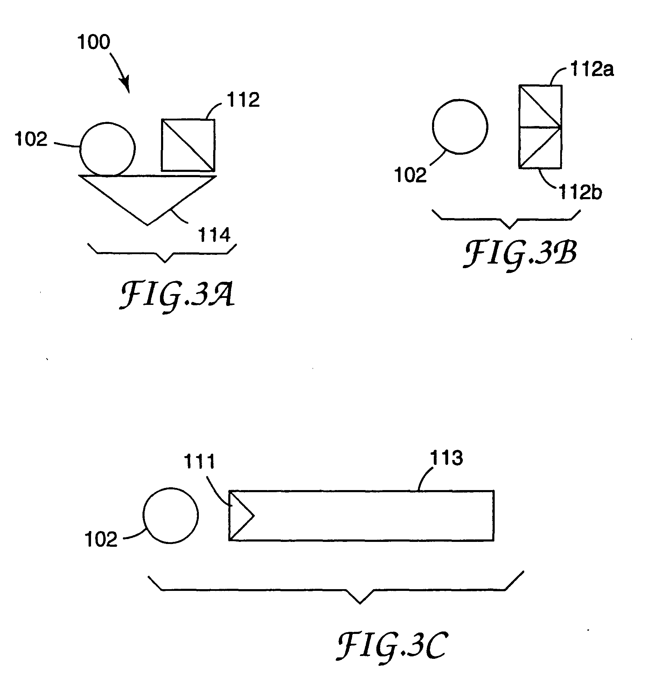

Figure 2 shows a simplified schematic cross section of the present polarized light source which illustrates the operation thereof. For simplicity of illustration, the diffuse source 102 and reflective polarizing element 104 are shown in a parallel geometry. However, it shall be understood that the same general optical principles apply to other geometries as well, particularly those geometries described below with respect to Figures 3A-3C and 5A-5D.

The light produced by the diffuse source 102 is illustrated by ray bundle 120. This light is randomly polarized and therefore has polarization components (a) and (b) present. This light is incident on the reflective polarizing element 104. The reflective polarizing element 104 is adapted to transmit light having a first polarization component (polarization component (a) in this example), and reflect light having the orthogonal polarization component ((b) in this example). Consequently, light of polarization component (a), depicted by ray bundle 126, is transmitted by the reflective polarizing element 104 while light of polarization component (b) is reflected, as indicated by ray bundle 122. For comparison purposes, ray bundle 126 also roughly corresponds to the amount of light transmitted if the reflective polarizing element 104 were replaced with an absorptive dichroic polarizer.

The reflective polarizing element 104 is preferably highly efficient and the total losses due to absorption within the reflective polarizing element 104 are very low (on the order of 1 percent). This lost light is depicted by ray bundle 121. The light of the rejected polarization is reflected, indicated by ray bundle 122, and reenters the diffuse source 102 where it reflects off of the phosphors. This causes some of the reflected light to be randomized and thus effectively converted to polarization component (a). Thus, as indicated by ray bundle 124, the reflected light emerges from the diffuse source 102 having both polarization components (a) and (b). The diffuse source 102 is not a perfect reflector and the light losses due to scattering and absorption are depicted by ray bundle 123. These losses are also low (on the order of 20 percent). The light of polarization component (a) in ray bundle 124 will be transmitted by reflective polarizing element 104, as indicated by ray bundle 127. The light in ray bundle 124 of polarization component (b) will again be reflected back into the source 102 and randomized in a similar fashion (this reflection not shown).

The result is a very efficient system for producing light of a desired polarization. The repeated reflections and randomizations effected by the combination of the diffuse source 102 and the reflective polarizing element 104 form an efficient mechanism for converting light from state (b) to state (a). The system is efficient in the sense that light which would otherwise have been absorbed, and therefore unavailable, is instead converted to the desired polarization. The present polarized light source thus makes much more efficient use of the light emitted from the source, since light of the rejected polarization is reflected back into the source and randomized. As a result, the total amount of light emitted from the source in the desired polarization is increased. The resulting amount of light of the desired polarization, depicted by ray bundles 126 and 127, may be 50-60 percent greater than the amount of light indicated by ray bundle 126, which would be produced if an absorptive dichroic polarizer were used instead of the reflective polarizing element 104.

The overall gain of the system depends on the efficiency of both the reflective polarizing element 104 and the diffuse source 102. Performance is maximized with a highly reflective and randomizing diffuse source 102, and a low loss, low absorbing reflective polarizing element 104.

Figures 3A, 3B and 3C show the optical principle of the present polarized light source 100 in which the reflective polarizing element is implemented using bulk optic components. In Figure 3A, a diffuse source 102 is coupled with a reflective polarizing element including a polarizing beam splitter 112 and dielectric prism 114. In Figure 3B, two polarizing beam splitters 112a and 112b form the reflective polarizing element. In Figure 3C, a dielectric film is coated onto a notched edge 111 of a light guide 113.

Operation of the light source of Figure 3A is shown in Figure 4A. Diffuse source 102 produces light, represented by ray bundle 130, having both polarization components (a) and (b). Polarizing beam splitter 112 transmits light of polarization (a) (ray bundle 131) and reflects light of polarization (b) (ray bundle 132) into dielectric prism 114. Dielectric prism 114 reflects the light back into diffuse source 102 where it is randomized (ray bundle 133) to include both polarizations (a) and (b). Of this, polarizing beam splitter 112 transmits light of polarization (a) (ray bundle 134) and again reflects light of polarization (b) (not shown). Thus, the light of incorrect polarization is recirculated to increase the amount of light produced in the desired polarization (ray bundles 131 and 134).

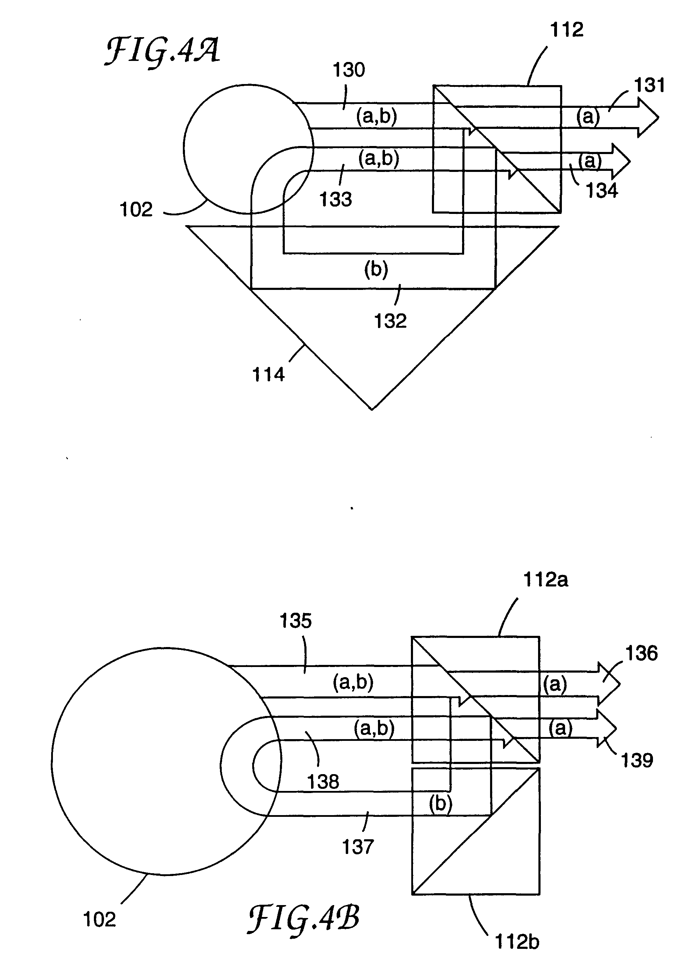

Operation of the light source of Figure 3B is shown in Figure 4B. Diffuse source 102 produces light, represented by ray bundle 135, having both polarization components (a) and (b). Polarizing beam splitter 112a transmits light of polarization (a) (ray bundle 136) and reflects light of polarization (b) (ray bundle 137) into polarizing beam splitter 112b. Polarizing beam splitter 112b reflects the light back into diffuse source 102 where it is randomized (ray bundle 138) to include both polarizations (a) and (b). Of this, polarizing beam splitter 112a transmits light of polarization (a) (ray bundle 139) and again reflects light of polarization (b) (not shown). Thus, the light of incorrect polarization is reflected and randomized to increase the amount of light produced in the desired polarization (ray bundles 136 and 139). Operation of the light source of Figure 3C is similar to that of Figure 3B.

The bulk optic reflective polarizing elements shown and described above with respect to Figures 3A-3C are efficient in the sense that they do not absorb a significant amount of light. However, they do suffer other disadvantages. For example, they are effective over only a narrow wavelength band and are thus not appropriate for applications requiring a broad spectral response. Also, the bulk optic components add bulk and weight to any system in which they are used and are therefore not appropriate for applications where light weight and small size are required. Finally, the bulk optic components are expensive and can substantially increase the cost of any system in which they are used.

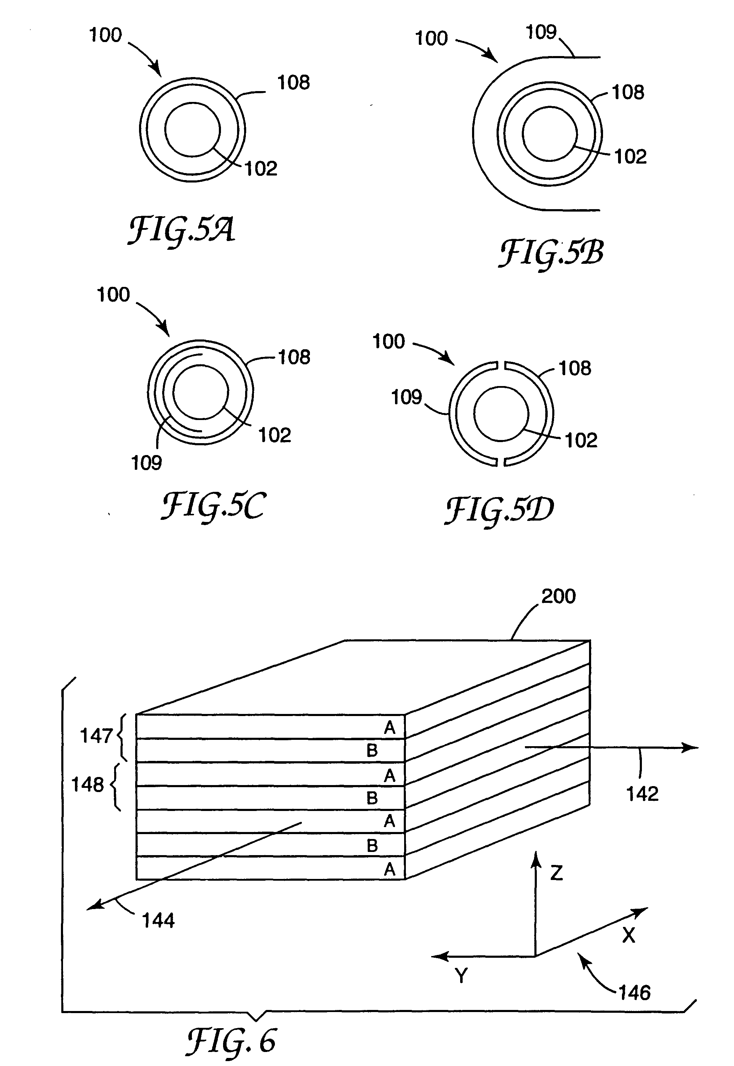

Figures 5A-5D show embodiments of the present polarized light source 100 in which the reflective polarizing element is implemented using a multilayer reflective polarizing film (RPF) 108. In the most general configuration shown in Figure 5A, the RPF 108 is wrapped around such that it completely encloses the diffuse source 102. The embodiments of Figures 5B-5D include a separate reflector in addition to the diffuse source 102 and RPF 108. The purpose of reflector 109 is to redirect light emitted from one side of the source towards the opposing side, providing even more polarized light in a given direction. In Figure 5B, a reflector 109 (preferably a specular reflector) is oriented around one side of the polarized source 100. In Figure 5C, a reflector 109 is located between the diffuse source 102 and the RPF 108. In this configuration, the reflector 109 may be laminated or otherwise attached to the RPF 108. Figure 5D shows a reflector 109 partially enclosing one side of the diffuse source 102 with the RPF 108 partially enclosing the other side of the diffuse source 102.

For the embodiments of Figures 5A-5D, the preferred reflective polarizing element 108 is a multilayered, birefringent reflective polarizing film (RPF) such as those described in commonly assigned U.S. Patent Application Serial Number 08/402,041, filed March 10, 1995, entitled "OPTICAL FILM". For a typical fluorescent lamp, the RFP yields an increase of 1.5-1.6 times more light in a given polarization as compared to the same source used without the RFP and an even larger increase compared to the same source used with an absorptive dichroic polarizer. The absorption is much less than that for a dichroic polarizer, and the angle and wavelength performance better than that obtainable with a vacuum coated bulk optic.

In addition, combining the RPF with the diffuse source as shown in Figures 5A-5D polarizes the light at the source, thus reducing requirements on the cosmetic quality of the RPF. The result is an increase in the amount of polarized light produced, while using less RPF, and relaxed manufacturing requirements due to the reduced requirements on the RPF's cosmetic quality.

The preferred reflector 109 is a multilayer birefringent mirror of the type described in the above-mentioned U.S. Patent Application Serial Number 08/402,041.

Figure 6 is a schematic perspective diagram of a segment of an exemplary multilayer stack 200 from which the preferred RPF and multilayer mirror can be made. The figure includes a coordinate system 146 that defines X, Y and Z directions that are referred to in the description of the RPF 108.

An illustrative multilayer stack 200 shown in Figure 6 is made of alternating layers (ABABA...) of two different materials, material "(A)" and material "(B)". Each layer in the multilayer stack 200 has indices of refraction associated with each direction x, y and z, referred to as nₓ, n_{y} and n_{z}. The optical behavior of the multilayer stacks are described in detail in the above-mentioned U.S. Patent Application Serial Number 08/402,041, but will be described briefly here.

The relationships between the indices of refraction in each film layer to each other and to the indices of refraction of the other layers in the film stack determine the optical behavior of the multilayer stack. A reflecting polarizer can be made by uniaxially stretching a multilayer stack 200 such as that shown in Figure 6 in which at least one of the materials in the stack has its index of refraction affected by the stretching process. Uniaxial stretching results in refractive index differences between adjoining layers in the stretch direction. The resultant stack will reflect light having its plane of polarization in the stretch direction while light having its plane of polarization in the nonstretch direction is transmitted.

A multilayer mirror can be made by biaxially stretching a multilayer stqck 200 such as that shown in Figure 6. Biaxial stretching of the multilayer stack results in refractive index differences in both stretch directions, thus resulting in high reflectivity for light in both planes of polarization.

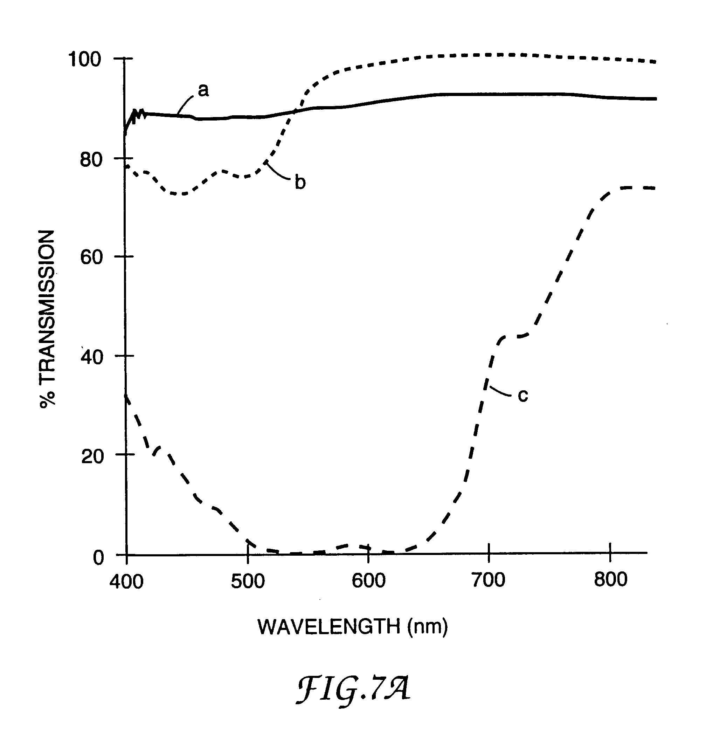

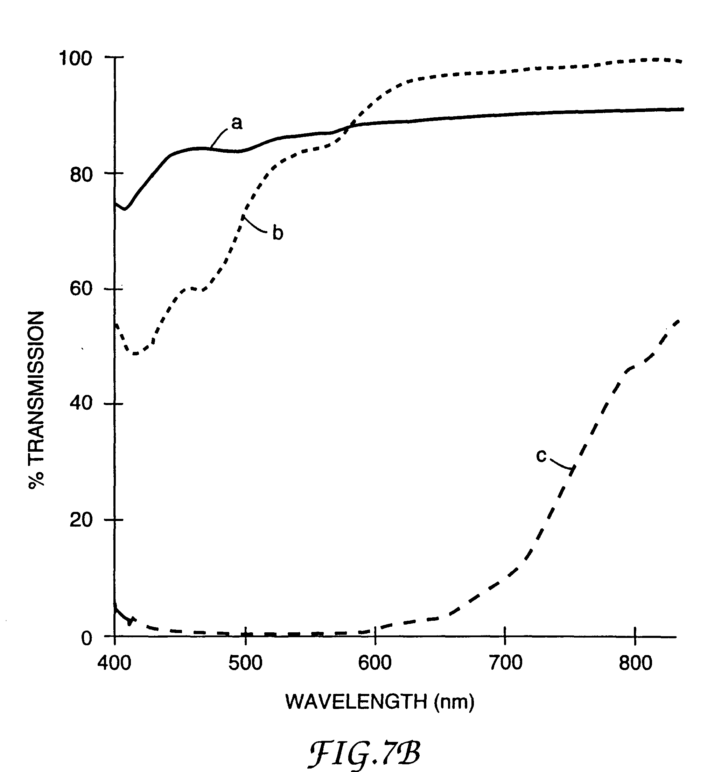

Figures 7A and 7B show transmission of exemplary reflective polarizing films. These two films are described in more detail in the above-mentioned U.S. Patent Application Serial Number 08/402,041.

The reflective polarizing film of Figure 7A is a multilayer stack of a polyethylene napthalate (PEN) and a copolymer of 70 mole % 2,6 napthalene dicarboxylate methyl ester, 15% dimethyl isophthalate and 15% dimethyl terphthalate with ethylene glycol (coPEN). (See example 10 of U.S. Patent Application Serial Number 08/402,041.) Curve a shows transmission of light with its plane of polarization in the nonstretch direction at normal incidence, curve b shows transmission of light with its plane of polarization in the nonstretch direction at 60° incidence, and curve c shows its transmission of light polarized in the stretch direction at normal incidence.

The reflective polarizing film of Figure 7B is a multilayer stack of PEN and a syndiotactic polystyrene (sPS). (See example 11 of above-mentioned U.S. Patent Application Serial Number 08/402,041.) Curve a shows transmission of light with its plane of polarization in the nonstretch direction at normal incidence, curve b shows transmission of light with its plane of polarization in the nonstretch direction at 60° incidence, and curve c shows its transmission of light polarized in the stretch direction at normal incidence.

The randomization that occurs within the diffuse source also alters the direction of the incident light so that a significant amount of light exits the diffuse source off-axis. Consequently, the path of such light in the reflective polarizing element is longer than the path length for near normal light. This effect must be addressed to optimize the optical performance of the system. Unlike dichroic polarizers, or the bulk optic reflective polarizers described herein, the preferred multilayer RPF 108 is capable of broadband reflectance at normal incidence into the longer wavelengths which is desirable to accommodate off-axis rays at shorter wavelengths.

The embodiments of the present polarized light source using the preferred RPF thus have several advantages. The reflection and randomization process achieved with the diffuse source and RPF gives a polarized source that is very efficient. The broadband reflectivity provided by the RPF means that efficiency is achieved over a broad spectral range. In addition, the RPF provides high off-angle reflectivity of the rejected polarization. These features make the RPF/diffuse source combination useful over a broader range of the optical spectrum and over a broader range of angles than the embodiments incorporating bulk optic components.

In addition, the RPF is lightweight, thin and flexible, which makes it good for applications requiring low bulk and light weight. The RPF also conforms well to the lamp surface and could be incorporated into the lamp manufacture.

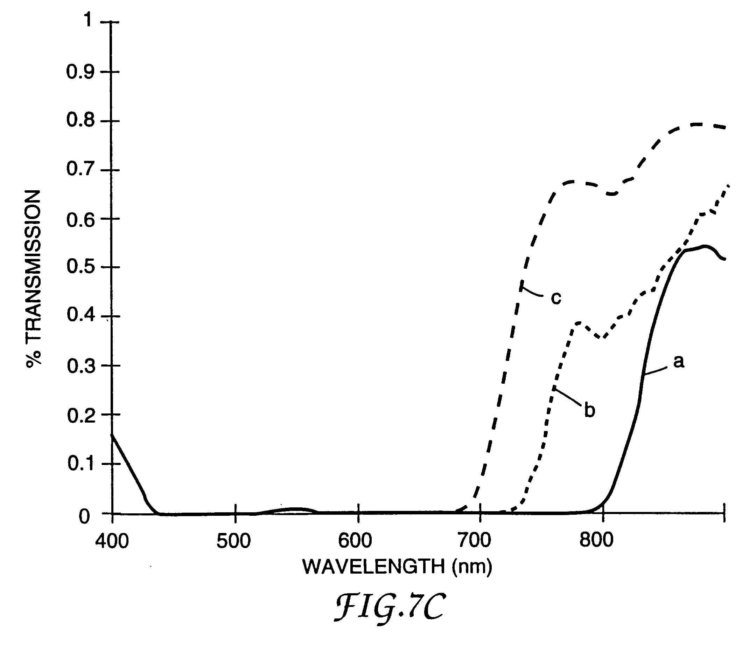

The preferred mirror is constructed in a fashion similar to the RPF, except that the film is biaxially stretched. Figure 7C shows the spectra for the multilayer mirror made according to the following:
**PEN:PMMA Mirror** A coextruded film containing 601 layers was made on a sequential flat-film-making line via a coextrusion process. Polyethylene Naphthalate (PEN) with an Intrinsic Viscosity of 0.57 dl/g (60 wt. % phenol/40 wt. % dichlorobenzene) was delivered by extruder A at a rate of 114 pounds per hour with 64 pounds per hour going to the feedblock and the rest going to skin layers described below. PMMA (CP-82 from ICI of Americas) was delivered by extruder B at a rate of 61 pounds per h with all of it going to the feedblock. PEN was on the skin layers of the feedblock. The feedblock method was used to generate 151 layers using the feedblock such as those described in U.S. Patent 3,801,429, after the feedblock two symmetric skin layers were coextruded using extruder C metering about 30 pounds per hour of the same type of PEN delivered by extruder A. This extrudate passed through two multipliers producing an extrudate of about 601 layers. U.S. Patent 3,565,985 describes similar coextrusion multipliers. The extrudate passed through another device that coextruded skin layuers at a total rate of 50 pounds per hour of PEN from extruder A. The web was length oriented to a draw ratio of about 3.2 with the web temperature at about 280°F. The film was subsequently preheated to about 310°F in about 38 seconds and drawn in the transverse direction to a draw ratio of about 4.5 at a rate of about 11% per second. The film was then heat-set at 440°F with no relaxation allowed. The finished film thickness was about 3 mil.

As seen in Figure 7C, curve a, the bandwidth at normal incidence is about 350 nm with an average in-band extinction of greater than 99%. At an incidence angle of 50° from the normal both s (curve b) and p-polarized (curve C) light showed similar extinctions, and the bands were shifted to shorter wavelengths as expected. The red band-edge for s-polarized light is not shifted to the blue as much as for p-polarized light due to the expected larger bandwith for s-polarized light.

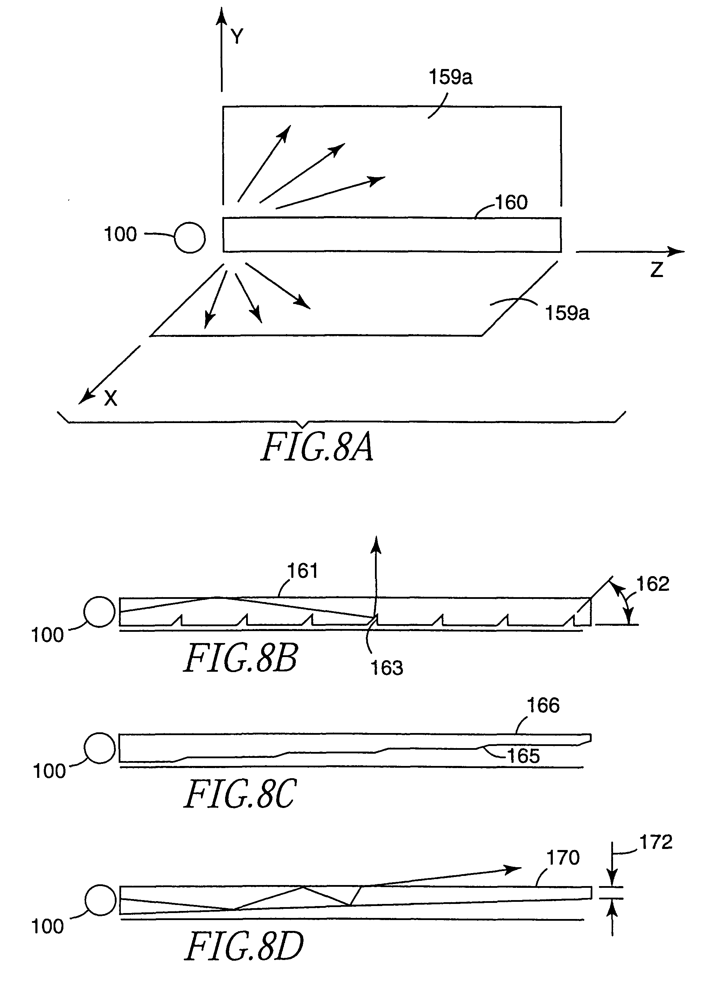

Figure 8A shows the present polarized light source 100 and a light guide 160 for delivering the polarized light emitted by polarized light source 100 to an associated optical display. The polarized source preferably polarizes light in the YZ (159a) or XZ (159b) plane for maximum polarization control in the light guide. For purposes of the present invention, the light guide 160 preferably has the ability to maintain the polarization state of the light emitted by the polarized light source 100. Any light guide which satisfies this requirement is appropriate for purposes of the present invention.

Figures 8B-8D show the present polarized light source 100 with three exemplary light guides 161, 166, and 170. As stated above, the light guide used with the present polarized light source 100 preferably maintains the polarization state of the light produced by the polarized light source 100. Each of the exemplary light guides shown in Figures 8B-8D satisfy this polarization preserving characteristic. It shall be understood that the light guides shown in Figures 8B-8D are shown for purposes of illustration only and are in no way intended to limit the appropriate light guides for use with the present polarized light source. On the contrary, as discussed above, any light guide meeting the polarization preserving requirement can be substituted for any of the light guides shown in Figures 8B-8D without departing from the spirit and scope of the present invention.

The light guides 8B-8D are typically constructed of acrylic, but could be any optical material. To ensure elimination of stress induced birefringence, the light guide could be filled with a transparent liquid or gel dielectric material.

The faceted light guide shown in Figure 8B and the stepped wedge light guide of Figure 8C extract light in the same manner. A light ray is reflected along the guide by total internal reflection. The ray continues until incident on a facet (such as facet 163 in Figure 8B or facet 165 in Figure 8C). The facet reflects the light through opposing surfaces of the guide. These guides are designed to emit much of the light through the surface opposite the facet without either a specular or diffuse back reflector. Adding a back reflector will increase the amount of light directed through the front surface of the guide.

The faceted light guide of Figure 8B is a constant thickness guide designed to extract light uniformly over the length of the guide. The facet angle is indicated as angle 162. The light presented to each facet is assumed to be substantially the same in angular distribution, differing only in intensity. In Figure 8B the facet spacing is varied along the guide length to provide this uniformity; the facets are closer together at the distal end of the guide. The facet depth can also be varied to provide uniformity. The facet spacing, facet depth and facet angle are chosen to extract a given amount of light from the guide, at a given rate, and direct it into a given angular region for a given size of guide.

The stepped light guide of Figure 8C is a series of surfaces parallel to the top surface of the guide interspersed with a series of uniformly spaced 45 degree facets, such as facet 165. The rate of extraction is generally controlled by reducing the guide thickness rather than by placing the facets closer together.

The wedge light guide shown in Figure 8D extracts light by forcing the incident ray angle to just exceed the critical angle for total internal reflection. This light is then removed from the guide within a narrow cone, yielding a higher brightness than if the same amount of optical power was distributed over a larger angle. Approximately one half the emitted light comes directly from the top surface of the guide. The rest of the light is emitted from the bottom surface of the guide. Use of a high reflectance, specular mirror (not shown) can be used to redirect the otherwise lost light back through the top surface of the guide.

As shown in Figure 8D, the thickness of a wedge light guide decreases as light progresses from the lamp to the distal end. The wedge angle is indicated by angle 172. The rate of extraction is controlled by the wedge angle 172 and the changing guide thickness. A larger wedge angle will increase the rate at which light is removed from the guide.

To determine which guide is best suited for a particular application, several factors must be considered. These include viewing angle, brightness, efficiency, ease of manufacture, optical design flexibility, usefulness for other geometries, and simplicity.

Because the present polarized light source and polarization preserving light guide results in an increased amount of light of the desired polarization, the need for an absorptive dichroic polarizer attached to an associated optical display is reduced.

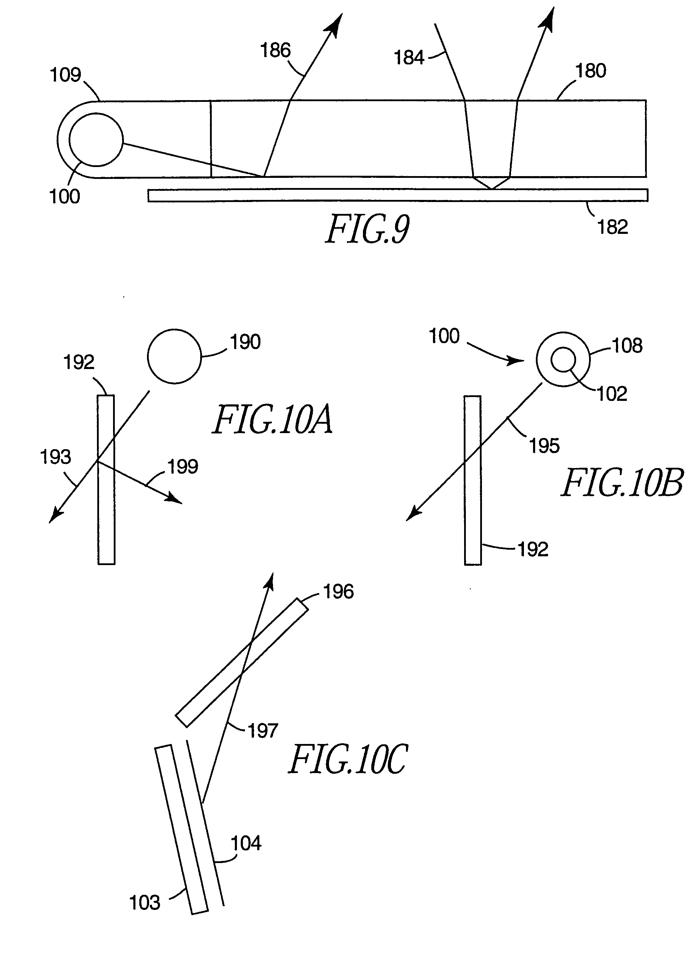

Figure 9 shows the present polarized light source 100 in a configuration useful for transflective optical displays. Such a display may be viewed in a transmissive (backlit) mode, in which the display is illuminated by polarized light source 100, or in a reflective mode, where the display is front lit under ambient lighting conditions.

In the transmissive mode, a polarized light source 100 injects light into the polarization preserving light guide 180, as indicated by ray 186. The polarization preserving light guide 180 may be any one of the light guides shown and described above with respect to Figures 8A-8D, or any other light guide that preserves the polarization of the light injected therein. The polarized light source 100 is preferably backed with a diffuse reflector 109 to increase the amount of light scatter and randomization. The light injected reflects off of the light guide 180 and then exits the guide 180 for illumination of an associated optical display.

The light guide 180 is backed by a brushed metal or other diffuse reflecting surface 182 for use in reflective mode. Ambient light, represented by ray 184, passes through the associated optical display, through the light guide 180 and is reflected off of surface 182. The scattered light provides contrast for viewing the associated optical display.

The present polarized light source therefore provides many features and advantages. Display brightness is controlled by adjusting the viewing angle, the display area, the absorption losses and the polarization. By polarizing the light immediately at the source, the present polarized light source allows the remaining variables to be independently optimized to provide the desired 'luminance, viewing angle, and display area.

Figure 10A shows the glare problem associated with a typical unpolarized source 190 in a task lighting situation. Light of polarization (a) indicated by ray 193 is transmitted through the task lighting surface 192 (such as a computer monitor), while light of polarization (b) indicated by ray 199 is reflected, creating glare. In Figure 10B, however, the present polarized source 100 is used. In this configuration, because a very high percentage of the light emitted from the polarized source is in polarization (a) indicated by ray 195 and is transmitted, glare is reduced.

Figure 10C shows a task lighting situation such as a vehicle dashboard display. A reflective polarizing element 104 is placed over the EL panel of a typical vehicle dashboard display 103. Without reflective polarizing element 104, glare would occur off of windshield 196. However, reflective polarizing element 104 means that the light indicated by ray 197 is all of one polarization and is therefore transmitted through the windshield 196 instead of a portion being reflected and producing glare.

Figure 11 shows an illustrative polarized light source in a fluorescent fixture such as those used in an office lighting environment. This hight source, however, does not form part of the present invention. In this light source, the fluorescent fixture includes a fluorescent lamp 102 and reflector 109. RPF 108 is placed on the output side of the fluorescent fixture over diffusing grid 111. Preferably, reflector 109 is a multilayer mirror such as that described above with respect to Figure 7C.

In Figure 11, the multilayer mirror provides several advantages over vapor coated metal mirrors traditionally used in lighting fixtures. First, the preferred multilayer mirrors have less diffuse reflectance (less than 2%) as compared to mirrors made by vapor coating a metal such as silver onto a substrate (diffuse reflectance of 5-6%). Also, the preferred multilayer mirror has a very flat spectral response across the visible spectrum. In contrast, vapor coated silver mirrors are more reflective in the red than in the blue, thus changing the apparent color of the light fixture. Because the multilayer mirror contains no metal, it eliminates corrosion problems experienced by vapor coated silver mirrors. Next, the preferred multilayer mirror has higher reflectivity, greater than 99%, as compared to vapor coated silver mirrors, which have reflectivities on the order of 92-93%. In addition, the multilayer mirror can be manufactured at a lower cost than vapor coated silver mirrors.

## Claims

1. A polarized light source, comprising:
a light source (102);
a light polarization randomizing element; and
a reflective polarizer (108) positioned to receive light from the light source (102), the reflective polarizer (108) adapted to transmit light (126) from the light source (102) having a first polarization orientation away from the light source (102), and to reflect light (122) having a different polarization orientation toward the light polarization randomizing element;
wherein the light randomizing element is adapted to randomize polarization of the reflected light (122), such that a portion of the reflected light (124) is converted into the first polarization and is transmitted by the reflective polarizer (108);
**characterised in that** the reflective polarizer at least partially encloses the light source (102) .

2. The polarized light source of claim 1, wherein the light source (102) comprises a diffuse light source.

3. The polarized light source of claim 1, wherein the reflective polarizer (108) comprises a multiple layer stack (200) of alternating layers of two different materials, wherein a refractive index difference between different material layers in a first in-plane direction (144) is greater than a refractive index difference between different material layers in a second in-plane direction (142).

4. The polarized light source of claim 2, wherein the reflective polarizer (108) completely encloses the diffuse light source (102).

5. The polarized light source of claim 2 further including a reflector (109) positioned on at least one side of the diffuse light source.

6. The polarized light source of claim 5, wherein the reflector (109) at least partially encloses the diffuse light source (102).

7. The polarized light source of claim 6, wherein the reflector (109) is positioned on one side of the diffuse light source and the reflective polarizer (108) is positioned on the other side of the diffuse light source.

8. The polarized light source of claim 5 wherein the reflector (109) comprises a multiple layer stack (200) of alternating layers of two different materials.

9. The polarized light source of claim 5 wherein the reflector (109) further has an average extinction of at least 99% for visible light of both the first and second polarizations incident normal to the reflective polarizer (108).

10. The polarized light source of claim 5 wherein the reflector (109) further has an average extinction of at least 99% for visible light of both the first and second polarizations incident at 50° from normal to the reflective polarizer.

11. The polarized light source of claim 3 or 8 wherein a first material is a poly(ethylene naphthalate).

12. The polarized light source of claim 11 wherein a second material is a polymethylmethacrylate (PMMA).

13. The polarized light source of claim 1 further including means (160, 161, 166, 170, 180) for delivering polarized light emitted by the polarized light source to an optical display.

14. The polarized light source of claim 13 wherein the delivering means comprises a polarization preserving light guide (160, 161, 166, 170, 180) positioned to receive the light of the first polarization transmitted by the reflective polarizer.

15. The polarized light source of claim 11 wherein a second material is a syndiotactic polystyrene.

16. The polarized light source of claim 3 wherein the multilayer stack (200) is oriented in the first in-plane direction (144).

17. The polarized light source of claim 1 wherein the light source (102) comprises a fluorescent lamp, incandescent lamp, solid state source, or electroluminescent lamp.

18. The polarized light source of claim 14 wherein the polarization preserving light guide comprises a faceted light guide (161).

19. The polarized light source of claim 14 wherein the polarization preserving light guide comprises a stepped wedge light guide (166).

20. The polarized light source of claim 14 wherein the polarization preserving light guide comprises a wedge light guide (170).

21. The polarized light source 14 of claim 29 further including a reflector (182) positioned behind the polarization preserving light guide (180) for reflecting ambient light (184) back through the optical display.

## Patentansprüche

1. Polarisierte Lichtquelle, aufweisend:
eine Lichtquelle (102),
ein die Lichtpolarisation zufällig machendes Element, und
einen reflektierenden Polarisator (108), der so angeordnet ist, daß er Licht von der Lichtquelle (102) empfängt, wobei der reflektierende Polarisator (108) dafür ausgelegt ist, Licht (126) von der Lichtquelle (102), das eine von der Lichtquelle (102) weg gerichtete erste Polarisationsorientierung aufweist, durchzulassen, und Licht (122), das eine zum die Lichtpolarisation zufällig machenden Element gerichtete abweichende Polarisationsorientierung aufweist, zu reflektieren,
wobei das das Licht zufällig machende Element dafür ausgelegt ist, die Polarisation des reflektierten Lichts (122) zufällig zu machen, so daß ein Teil des reflektierten Lichts (124) in die erste Polarisation umgewandelt und vom reflektierenden Polarisator (108) durchgelassen wird,
**dadurch gekennzeichnet, daß** der reflektierende Polarisator die Lichtquelle (102) zumindest teilweise umschließt.

2. Polarisierte Lichtquelle nach Anspruch 1, wobei die Lichtquelle (102) eine diffuse Lichtquelle aufweist.

3. Polarisierte Lichtquelle nach Anspruch 1, wobei der reflektierende Polarisator (108) einen mehrschichtigen Stapel (200) alternierender Schichten zweier verschiedener Materialien aufweist, wobei die Brechungsindexdifferenz zwischen verschiedenen Materialschichten in einer ersten in der Ebene liegenden Richtung (144) größer ist als die Brechungsindexdifferenz zwischen verschiedenen Materialschichten in einer zweiten in der Ebene liegenden Richtung (142).

4. Polarisierte Lichtquelle nach Anspruch 2, wobei der reflektierende Polarisator (108) die diffuse Lichtquelle (102) vollkommen umschließt.

5. Polarisierte Lichtquelle nach Anspruch 2, welche weiter einen Reflektor (109) aufweist, der auf mindestens einer Seite der diffusen Lichtquelle angeordnet ist.

6. Polarisierte Lichtquelle nach Anspruch 5, wobei der Reflektor (109) die diffuse Lichtquelle (102) zumindest teilweise umschließt.

7. Polarisierte Lichtquelle nach Anspruch 6, wobei der Reflektor (109) auf einer Seite der diffusen Lichtquelle angeordnet ist und der reflektierende Polarisator (108) auf der anderen Seite der diffusen Lichtquelle angeordnet ist.

8. Polarisierte Lichtquelle nach Anspruch 5, wobei der Reflektor (109) einen mehrschichtigen Stapel (200) alternierender Schichten zweier verschiedener Materialien aufweist.

9. Polarisierte Lichtquelle nach Anspruch 5, wobei der Reflektor (109) ferner für sichtbares Licht der ersten und der zweiten Polarisation, das senkrecht auf den reflektierenden Polarisator (108) einfällt, eine durchschnittliche Extinktion von mindestens 99 % aufweist.

10. Polarisierte Lichtquelle nach Anspruch 5, wobei der Reflektor (109) ferner für sichtbares Licht der ersten und der zweiten Polarisation, das unter 50° gegenüber der Senkrechten auf den reflektierenden Polarisator (108) einfällt, eine durchschnittliche Extinktion von mindestens 99 % aufweist.

11. Polarisierte Lichtquelle nach Anspruch 3 oder 8,
wobei ein erstes Material ein Poly(ethylennaphthalat) ist.

12. Polarisierte Lichtquelle nach Anspruch 11, wobei ein zweites Material ein Polymethylmethacrylat (PMMA) ist.

13. Polarisierte Lichtquelle nach Anspruch 1, welche ferner eine Einrichtung (160, 161, 166, 170, 180) zum Übertragen von der polarisierten Lichtquelle emittierten polarisierten Lichts zu einer optischen Anzeige aufweist.

14. Polarisierte Lichtquelle nach Anspruch 13, wobei die Übertragungseinrichtung einen die Polarisation bewahrenden Lichtleiter (160, 161, 166, 170, 180) aufweist, der so angeordnet ist, daß er das vom reflektierenden Polarisator durchgelassene Licht der ersten Polarisation empfängt.

15. Polarisierte Lichtquelle nach Anspruch 11, wobei ein zweites Material ein syndiotaktisches Polystyren ist.

16. Polarisierte Lichtquelle nach Anspruch 3, wobei der mehrschichtige Stapel (200) in der ersten in der Ebene liegenden Richtung (144) orientiert ist.

17. Polarisierte Lichtquelle nach Anspruch 1, wobei die Lichtquelle (102) eine Fluoreszenzlampe, eine Glühlampe, eine Festkörperquelle oder eine Elektrolumineszenzlampe aufweist.

18. Polarisierte Lichtquelle nach Anspruch 14, wobei der die Polarisation bewahrende Lichtleiter einen mit Facetten versehenen Lichtleiter (161) aufweist.

19. Polarisierte Lichtquelle nach Anspruch 14, wobei der die Polarisation bewahrende Lichtleiter einen mit einem abgestuften Keil versehenen Lichtleiter (166) aufweist.

20. Polarisierte Lichtquelle nach Anspruch 14, wobei der die Polarisation bewahrende Lichtleiter einen mit einem Keil versehenen Lichtleiter (170) aufweist.

21. Polarisierte Lichtquelle nach Anspruch 14, welche ferner einen Reflektor (182) aufweist, der hinter dem die Polarisation bewahrenden Lichtleiter (180) angeordnet ist, um Umgebungslicht (184) durch die optische Anzeige zurückzureflektieren.

## Revendications

1. Source de lumière polarisée, comprenant :
- une source de lumière (102) ;
- un élément de randomisation de polarisation de lumière ; et
- un polariseur réflecteur (108) positionné afin de recevoir la lumière provenant de la source de lumière (102), le polariseur réflecteur (108) étant adapté pour transmettre la lumière (126) provenant de la source de lumière (102) ayant une première orientation de polarisation loin de la source de lumière (102) et pour réfléchir la lumière (122) ayant une orientation de polarisation différente vers l'élément de randomisation de lumière polarisée ;
dans laquelle l'élément de randomisation de lumière est adapté pour randomiser la polarisation de la lumière réfléchie (122), de telle sorte qu'une partie de la lumière réfléchie (124) est convertie en la première polarisation et est transmise par le polariseur réflecteur (108) ;
**caractérisée en ce que** le polariseur réflecteur entoure au moins partiellement la source de lumière (102).

2. Source de lumière polarisée selon la revendication 1, dans laquelle la source de lumière (102) comprend une source de lumière diffuse.

3. Source de lumière polarisée selon la revendication 1, dans laquelle le polariseur réflecteur (108) comprend un empilement de couches multiples (200) de couches alternées de deux matériaux différents, dans lequel une différence d'indice de réfraction entre des couches de matériaux différents dans une première direction (144) du plan est supérieure à une différence d'indice de réfraction entre des couches de matériaux différents dans une deuxième direction (142) du plan.

4. Source de lumière polarisée selon la revendication 2, dans laquelle le polariseur réflecteur (108) entoure complètement la source de lumière diffuse (102).

5. Source de lumière polarisée selon la revendication 2, incluant en outre un réflecteur (109) positionné au moins d'un côté de la source de lumière diffuse.

6. Source de lumière polarisée selon la revendication 5, dans laquelle le réflecteur (109) entoure au moins partiellement la source de lumière diffuse (102).

7. Source de lumière polarisée selon la revendication 6, dans laquelle le réflecteur (109) est positionné d'un côté de la source de lumière diffuse et le polariseur réflecteur (108) est positionné de l'autre côté de la source de lumière diffuse.

8. Source de lumière polarisée selon la revendication 5, dans laquelle le réflecteur (109) comprend un empilement de couches multiples (200) de couches alternées de deux matériaux différents.

9. Source de lumière polarisée selon la revendication 5, dans laquelle le réflecteur (109) possède en outre une extinction moyenne d'au moins 99% pour la lumière visible à la fois des première et deuxième polarisations incidente suivant la normale sur le polariseur réflecteur (108).

10. Source de lumière polarisée selon la revendication 5, dans laquelle le réflecteur (109) possède en outre une extinction moyenne d'au moins 99% pour la lumière visible à la fois des première et deuxième polarisations incidente à 50° par rapport à la normale sur le polariseur réflecteur.

11. Source de lumière polarisée selon la revendication 3 ou 8, dans laquelle un premier matériau est un poly(naphtalate d'éthylène).

12. Source de lumière polarisée selon la revendication 11, dans laquelle un deuxième matériau est un poly(méthacrylate de méthyle) (PMMA).

13. Source de lumière polarisée selon la revendication 1, incluant en outre des moyens (160, 161, 166, 170, 180) pour délivrer une lumière polarisée émise par la source de lumière polarisée à un écran d'affichage optique.

14. Source de lumière polarisée selon la revendication 13, dans laquelle les moyens de délivrance comprennent un guide de lumière conservant la polarisation (160, 161, 166, 170, 180) positionné afin de recevoir la lumière de la première polarisation transmise par le polariseur réflecteur.

15. Source de lumière polarisée selon la revendication 11, dans laquelle un deuxième matériau est un polystyrène syndiotactique.

16. Source de lumière polarisée selon la revendication 3, dans laquelle l'empilement multicouche (200) est orienté dans la première direction (144) du plan.

17. Source de lumière polarisée selon la revendication 1, dans laquelle la source de lumière (102) comprend une lampe fluorescente, une lampe incandescente, une source à l'état solide ou une lampe électroluminescente.

18. Source de lumière polarisée selon la revendication 14, dans laquelle le guide de lumière conservant la polarisation comprend un guide de lumière à facettes (161).

19. Source de lumière polarisée selon la revendication 14, dans laquelle le guide de lumière conservant la polarisation comprend un guide de lumière en coin à gradins (166).

20. Source de lumière polarisée selon la revendication 14, dans laquelle le guide de lumière conservant la polarisation comprend un guide de lumière en coin (170).

21. Source de lumière polarisée selon la revendication 14, incluant en outre un réflecteur (182) positionné derrière le guide de lumière conservant la polarisation (180) pour réfléchir la lumière ambiante (184) en la renvoyant à travers l'écran d'affichage optique.
